(19)

Europäisches
Patentamt
European
Patent Office
Office européen
des brevets

(11) **EP 3 235 890 A1**

(12) **EUROPEAN PATENT APPLICATION**

(43) Date of publication:
25.10.2017 Bulletin 2017/43

(21) Application number: **16305449.7**

(22) Date of filing: **18.04.2016**

(51) Int Cl.:
*C09K 8/467* (2006.01)     *C04B 20/10* (2006.01)
*C04B 28/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
• **Services Pétroliers Schlumberger**
  **75007 Paris (FR)**
  Designated Contracting States:
  **FR**
• **Schlumberger Technology B.V.**
  **2514 JG The Hague (NL)**
  Designated Contracting States:
  **AL AT BE BG CH CY CZ DE DK EE ES FI GB GR HR HU IE IS IT LI LT LU LV MC MK MT NL NO PL PT RO RS SE SI SK SM TR**

(72) Inventors:
• **DROGER, Nicolas**
  **92142 Clamart Cedex (FR)**
• **ALLOUCHE, Mickael**
  **92142 Clamart Cedex (FR)**
• **DENNIS, Katia**
  **92142 Clamart Cedex (FR)**
• **KOMOCKI, Sylwia**
  **92142 Clamart Cedex (FR)**

(74) Representative: **Osha Liang**
  **2, rue de la Paix**
  **75002 Paris (FR)**

(54) **SILICA-ENCAPSULATED EXPANSION AGENTS FOR WELL CEMENTING**

(57)    A subterranean well cementing slurry is prepared by coating particles of an expanding agent with silica, and combining the coated particles with water and hydraulic cement in any order. The slurry is placed around a tubular member in an annular region in the well where it is allowed to set and harden, and at least some of the expansion is delayed until after the cement is at least partially set.

**EP 3 235 890 A1**

## Description

## BACKGROUND

The statements in this section merely provide background information related to the present disclosure and may not constitute prior art.

The present disclosure broadly relates to cement and cementing operations.

Hydraulic cement is any substance provided (at least at one time in the manufacturing process) in a powdered or granular form, that when mixed with a suitable amount of water, can form a paste that can be poured or molded to set as a solid mass. In the oil and gas industry, good bonding between set cement and casing, and also between set cement and the formation, are essential for effective zonal isolation. Poor bonding limits production and reduces the effectiveness of stimulation treatments. Communication between zones can be caused by inadequate mud removal, poor cement/formation bonding, expansion and contraction of the casing resulting from internal pressure variations or thermal stresses, and cement contamination by drilling or formation fluids. Under such circumstances a small gap or microannulus may form at the cement/casing interface, the cement/formation interface, or both.

The addition of charcoal with wood resin-coated aluminum particles for an expansive cement is disclosed in US4332619 and US4328038. The use of encapsulated gas and other expanding fluids is disclosed in US7494544 and US7156174.

Portland cement manufacturers have employed shrinkage-compensating cements that include an offsetting "expansive cement", which is a hydraulic cement that, after setting, increases in volume to significantly greater degree than Portland cement paste to form an expanded set cement as defined in the American Concrete Institute 223R-10 Guide for the Use of Shrinkage-Compensating Concrete (2010). Representative examples of shrinkage-compensating cement are found in US7988782, US20150107493 and US4419136.

Expansive cement has also been used in the oil and gas industry to cement wells. Representative examples of this technology are found in US2465278, US3884710, US4002483, US4797159, US5942031, US6966376, and US14/307430. Use of expanding agents to cement wells is problematic since the expanding agents known in the art begin hydrating and thus begin to expand as soon as they contact water. Accordingly, if the expanding agent is going to expand the cement after the cement slurry is positioned within the well, the expanding agent cannot be added to the cement slurry mix water. Also, when the expansion agent is added to the slurry, the viscosity and/or yield stress of the slurry increase before the slurry can be placed and set. This is especially problematic when the cement slurry is exposed to increased temperature conditions such as are frequently encountered downhole in a well. Incorporation of expanding agents thus leads to difficulties in pumping and placement of the slurry, along with complicating job design.

Moreover, since the cement slurry is readily flowable, any hydration of the expanding agent that occurs before the cement begins to set does not contribute to producing a compressive force within the annulus of the well due to the expansion of the set cement.

Various efforts to delay expansion have been suggested. Coating of metal oxide particles with non-hydratable or previously hydrated minerals such as metal carbonates, hydroxides and hydrates was suggested in US4332619, US5741357, EP2169027A1; but these materials can be difficult to prepare and have had only limited success.

The cement industry in general, is in need of ways to improve the preparation, handling and design of hydraulic cements with hydratable expanding agents that address these problems and shortcomings; and the oil and gas industry is in need of ways to better and more controllably delay expansion of the expanding agents, and to improve the bonding between the set cement and the casing within the well annulus.

## SUMMARY

Some embodiments of the present disclosure are directed to well cementing using a silica-encapsulated expanding agent.

In an aspect, embodiments are directed to methods to prepare a well cementing slurry, comprising coating particles of an expanding agent with silica to form capsules comprising a shell of the silica and a core of the expanding agent, and combining the capsules with water and hydraulic cement to form a cement slurry for cementing a well. In embodiments, the method comprises contacting the particles with a solution of a silicate, e.g., sodium and/or potassium silicate in an aqueous or non-aqueous solvent, and condensing the silicate to form the silica shell. In embodiments, the capsules are treated with an organic and/or inorganic acid to neutralize any residual silicate and/or heat treated at a temperature from 200°C to 1000°C. In embodiments, the capsules and the water are first mixed together, and the mixture blended with the hydraulic cement.

In a further aspect, embodiments are directed to a well cementing slurry comprising water, hydraulic cement, and capsules comprising a silica shell and a core of an expanding agent. In another aspect, embodiments are directed to a system comprising the well cementing slurry and a pumping system to place a stage of the slurry in the annulus.

In a further aspect, embodiments are directed to methods to cement a subterranean well having a borehole disposed through a formation, comprising: (i) preparing a cement slurry comprising water, hydraulic cement, and capsules comprising a silica shell and a core of an expanding agent, e.g., by coating particles of an expanding agent with silica to form capsules comprising a shell of the silica and a core of the expanding agent, and combining the capsules with water and hydraulic cement; (ii) placing the slurry in an annular region of the well around a tubular body; (iii) hardening the slurry to form an at least partially set cement; and (iv) hydrating the expanding agent to form an expanded set cement within the annular region. In embodiments, the method further comprises forming bonds between the expanded set cement, the tubular body and a wall of the borehole, and/or isolating a zone of the formation adjacent the expanded set cement.

## BRIEF DESCRIPTION OF THE DRAWINGS

FIG. 1A is a schematic diagram showing a release mechanism for a capsule according to embodiments of the disclosure;

FIG. 1B is a schematic diagram showing another release mechanism for a capsule according to embodiments of the disclosure;

FIG. 2 shows a diagram of a well cemented according to embodiments of the disclosure;

FIG. 3 shows a diagram of an annulus between two tubular members cemented according to embodiments of the disclosure;

FIG 4 shows a capsule having a single core-shell arrangement according to embodiments of the disclosure;

FIG. 5 shows a capsule having a matrix island arrangement according to embodiments of the disclosure;

FIG. 6 is a calorimetry curve showing the hydration of uncoated CaO/MgO particles according to a comparative example;

FIG. 7 is a calorimetry curve showing the hydration of silica-coated CaO/MgO particles in an example according to embodiments of the disclosure;

FIG. 8 shows the confined cement expansion of a hydraulic cement slurry prepared with the silica-coated CaO/MgO particles of FIG. 7 in an example according to embodiments of the disclosure.

## DETAILED DESCRIPTION

The present disclosure will be described in terms of treatment of vertical wells, but is equally applicable to wells of any orientation. As used herein, "transverse" is intended to refer to a direction transverse to the axis of the well, e.g., the horizontal direction in a vertical well and vice versa. The disclosure will be described for hydrocarbon-production wells, but it is to be understood that the disclosed methods can be used for wells for the production of other fluids, such as water or carbon dioxide, or, for example, for injection or storage wells. It should also be understood that throughout this specification, when a concentration or amount range is described as being useful, or suitable, or the like, it is intended that any and every concentration or amount within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each and every possible number along the continuum between about 1 and about 10. In other words, when a certain range is expressed, even if only a few specific data points are explicitly identified or referred to within the range, or even when no data points are referred to within the range, it is to be understood that applicant appreciates and understands that any and all data points within the range are to be considered to have been specified, and that the applicant has possession of the entire range and all points within the range.

As used in the specification and claims, "near" is inclusive of "at." The term "and/or" refers to both the inclusive "and" case and the exclusive "or" case, whereas the term "and (or)" refers to the inclusive "and" case only and such terms are used herein for brevity. For example, a component comprising "A and/or B" may comprise A alone, B alone, or both A and B; and a component comprising "A and or B" may comprise A alone, or both A and B.

In this disclosure, a "tubular body" or "tubular member" may be any string of tubulars that may be run into the wellbore and at least partially cemented in place. Examples include casing, liner, solid expandable tubular, production tubing, drill pipe, and the like. For purposes of clarity and convenience, the following discussion is in reference to well casing as a non-limiting example of a tubular body or member.

As used herein, a "set cement" refers to a cement which has set (e.g., been allowed to cure, allowed to harden, and the like) for a time greater than or equal to the "initial time of setting", also referred to herein simply as the "initial set time" as determined according to ASTM C191-04a, "Time of Setting of a Hydraulic Cement by Vicat Needle", or an equivalent thereof. This same method is also used to determine the "final set time" of the cement slurry.

As used herein, a "bond" between a body within the wellbore and the expanded set cement refers to acoustically coupled contact between the body and the cement and/or the formation of a fluid-tight seal. For purposes herein, a well casing or other tubular body is acoustically coupled to the expanded set cement when the cement is shown to exist behind the well casing by acoustic logging techniques known in the art. Accordingly, for purposes herein, a bond does not exist between a well casing and a cement sheath when a micro annulus or airspace is present between the two as shown by acoustic logging techniques. Likewise, as used herein, "compression" in the annular region refers to compression in the transverse direction against or between the first tubular member and the borehole wall or second tubular member due to expansion of the cement.

As used herein, the terms "shell" and "coating" are used synonymously to mean the outermost one or group of layers covering or over a surface of a body, but need not directly contact the surface. As used herein, a water permeable shell or coating material refers to an organic compound, an inorganic compound, or a combination thereof which allows infiltration of water therethrough. In embodiments, the water permeable shell may include components or sections which are at least partially soluble in water, which undergo a chemical reaction upon contact with water, which decompose upon contact with water, which undergo a phase transition under subject downhole conditions which allows water infiltration therethrough, or any combination thereof. In embodiments, a water permeable shell includes a shell which at least partially surrounds one or more particles, e.g., expanding agent particle, but which has pores, voids, and/or discontinuities within the shell which allow water to pass through the shell and contact the particles. As used herein, a water permeable shell may also include a shell which allows diffusion of water through the shell e.g., via partial solubility and/or osmosis.

An expanding agent is any material, which, when added to hydraulic cement, tends to increase the volume of the set cement, e.g., a hydratable material that combines with water to form a hydrate having a larger volume relative to the hydratable material. In some embodiments, the expanding agent comprises calcium oxide, magnesium oxide, calcium sulfate hemihydrate, or a combination thereof. In some embodiments, the expanding agent comprises or consists of calcium oxide. In some embodiments, the expanding agent comprises or consists of magnesium oxide. In some embodiments, the expanding agent comprises or consists of a mixture of calcium oxide and magnesium oxide, e.g., in a weight ratio of CaO:MgO of from 1:100 to 100:1.

The terms capsule, encapsulated expanding agent, expanding agent capsule, capsule, coated particles, and the like are used interchangeably to refer to a capsule comprising a core as a single entity disposed within a water-permeable shell or a core material dispersed throughout the shell matrix.

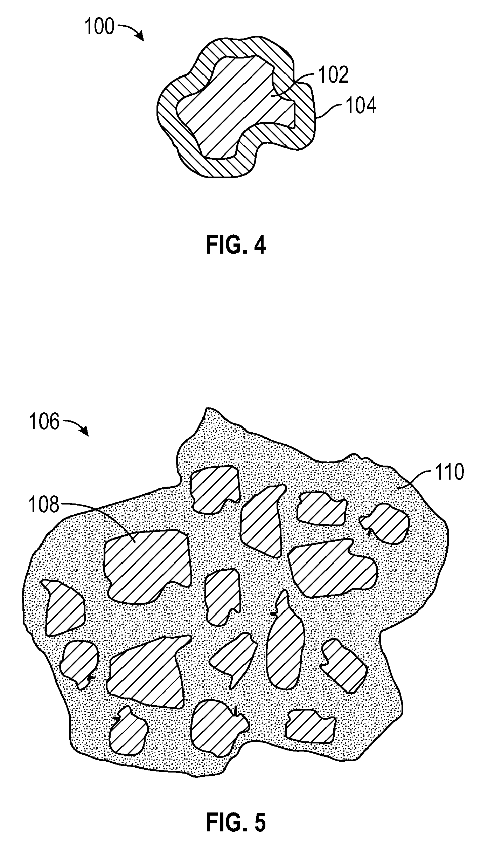

As used herein, capsules may comprise a single-core arrangement or configuration, i.e., a single core at least partially contained within a water permeable shell (cf. FIG. 4) and/or may comprise a "matrix-island" arrangement or configuration in which the expanding agent is distributed at least partially within each particle or capsules as small islands within a matrix of the encapsulating or shell material (cf. FIG. 5), e.g., the expanding agent is dispersed as a discontinuous phase within the continuous shell material. Unless stated otherwise, reference to a capsule includes both single core-shell and matrix-island arrangements. In some embodiments, the core is homogenous. In other embodiments, the core may comprise various components.

In embodiments, the delay in expansion of the cement slurry is determined relative to the initial set time, the final set time, or a combination thereof for the cement slurry. In embodiments, to evaluate the suitability of a proposed cement formulation for a particular cementing job, the initial and final set times, as well as the relative expansion, are determined at an appropriate pressure and temperature, e.g., a downhole pressure and temperature expected to be encountered during the cementing job, or if there is a range of temperatures, the highest temperature expected for the cement or, if this exceeds the limits of the testing apparatus, then the highest temperature limit of the testing apparatus. For purposes of the claims and embodiments herein, the set times may be determined at standard conditions of 45°C and 1 atmosphere of pressure, unless otherwise stated. The initial set time and the final set time are determined according to ASTM C191-04a, or an equivalent thereof. The relative expansion properties of the cement slurry at various times, or within various time intervals, are determined relative to the total amount of expansion (the total percent expansion) obtained by the cement slurry, utilizing the percent expansion determined according to API-10B-5.

In some embodiments herein, the well cementing slurry exhibits less than 50% relative expansion, based on a total percent expansion of the expanded set cement determined according to API-10B-5, prior to an initial set time for the cement slurry, determined according to ASTM C191-04a, and greater than 50% relative expansion after the initial set time for the cement slurry. For purposes herein, the percent expansion produced by setting or hardening of the cement slurry into the expanded set cement is determined according to API-10B-5 or an equivalent thereof. In this method, a ring shaped mold sealed on the top and bottom is filled to form a circular ring of cement. The mold has a stationary inner ring surrounded by an expandable outer ring which increases in circumference as the cement slurry inside the mold sets and expands. The test may be conducted at various temperatures and pressures. The percent expansion is determined by first measuring the distance M (mm) between two points on the outer ring at the time of filling the mold with the cement $T_0$ (e.g., measure $M_0$(mm) @ $T_0$), and then again measuring the distance between these same two points after the cement has set to form the expanded set cement. This measurement is determined at the final time $T_f$, as specified in the method (e.g., $M_f$(mm) @ $T_f$). The total percent expansion is then determined by multiplying the difference between the final distance and the initial distance by a constant associated with the particular mold, according to the following formula:

$$\text{Percent expansion} = (M_f - M_0) * \text{mold constant.}$$

For purposes herein, this percent expansion obtained at the final time $T_f$ is referred to as the total percent expansion of the cement. This total percent expansion of the cement serves as the basis for all relative percent expansion determinations, as discussed herein. For purposes herein, the relative expansion of the cement slurry at a particular time ($T_1$), referred to as the percent relative expansion is equal to the percent expansion of the slurry (or setting cement) measured at a time $T_1$ divided by the total percent expansion achieved by the expanded set cement at $T_f$ determined according to API-10B-5.

For purposes of the claims and embodiments herein, the percent relative expansion may be determined at standard conditions of 45°C and 1 atmosphere of pressure, unless otherwise stated. In embodiments, to evaluate the suitability of a proposed cement formulation for a particular cementing job, the percent relative expansion is determined at an appropriate pressure and temperature, e.g., a downhole pressure and temperature expected to be encountered during the cementing job, or if there is a range of temperatures, the highest temperature expected for the cement that is within the limits of the testing apparatus, e.g., if the testing apparatus has a maximum testing temperature of 100°C, the testing temperature is the lesser of the maximum temperature of the annular region or 100°C. In embodiments, when it is determined that the proposed cement slurry formulation is suitable for the job, the cement slurry for the well cementing job is prepared in accordance with the formulation meeting the expansion characteristics.

As an example, if a percent expansion at time $T_1$ is determined according to API-10B-5 to be 0.1%, and the total percent expansion at time $T_f$ is determined according to the same method under the same conditions to be 1%, the percent relative expansion of the cement slurry at time $T_1$ would be:

$$0.1\%/1\% * 100\% = 10\% \text{ relative expansion at } T_1$$

Since the cement slurry being placed within the annulus of the wellbore is readily flowable, any expansion which occurs before the cement begins to set may increase the volume of the cement slurry, and is not thought to contribute to expansion within the annulus which produces a cement sheath transversely compressed therein. Accordingly, in embodiments, at least a percentage of the hydration of the expanding agent is delayed until after the initial set time of the cement, thereby delaying the expansion of the cement to a time after the slurry becomes more resistant to flow. This allows placement of the cement slurry within the annulus and at least partial setting of the cement prior to expansion of the cement.

In one aspect, embodiments herein relate to methods to prepare a well cementing slurry, comprising the steps of coating particles of an expanding agent with silica, and combining the coated particles with mix water and cement to form a cement slurry for cementing a well.

An expanding agent is any material, which, when added to hydraulic cement, tends to increase the volume of the set cement, e.g., a hydratable material that combines with water to form a hydrate having a larger volume relative to the hydratable material. In embodiments, the expanding agent comprises a metal oxide which hydrates to form the corresponding metal hydroxide. Examples include calcium oxide, magnesium oxide, calcium sulfate hemihydrate, or combinations thereof. In embodiments, the expanding agent comprises calcium oxide, magnesium oxide, or a combination thereof. In embodiments, the expanding agent particles have an average particle size between 0.1 $\mu$m and 500 $\mu$m, or between 1 $\mu$m and 100 $\mu$m, prior to coating, and the coated particles have an average particle size between 1 $\mu$m and 1500 $\mu$m, 1 $\mu$m and 1000 $\mu$m, between 10 $\mu$m and 900 $\mu$m, between 200 $\mu$m and 800 $\mu$m, between 250 $\mu$m and 700 $\mu$m or between 250 $\mu$m and 500 $\mu$m.

In some embodiments, coating the particles with the silica comprises contacting the particles with a solution of the silicate, and condensing the silicate in the coating. In some embodiments, particles of the expanding agent are encapsulated with the silica coating by condensation of sodium silicate, potassium silicate, or a combination thereof. In some embodiments, the silicate solution is aqueous or non-aqueous. The silicate solution in some embodiments is sprayed on the particles or otherwise paced in contact with the particles. Any spraying methodology or equipment may be used, e.g., a fluidized bed reactor, a spouted bed reactor, or the like. Multiple passes can be used in embodiments to increase the thickness of the coating.

In embodiments, an acid treatment may be used to neutralize any remaining reactive materials from the silicate solution, e.g., by contacting the particles with an organic or inorganic acid or acidic solution thereof, such as, for example, hydrochloric acid, sulfuric acid, nitric acid, phosphoric acid, acetic acid, methane sulfonic acid, and the like, and combinations thereof.

In embodiments, the capsules are heat treated, which may strengthen or reinforce the silica coating, and thereby inhibit water infiltration and/or breakage, and increase the period of delayed expansion. Any method can be used to heat the capsules, e.g., a rotary kiln or calciner, conveyor belt furnace, or the like. The capsules may be heated, e.g., at a controlled ramp to avoid thermal shock, to temperatures from 200°C to 1000°C, e.g., 250°C to 650°C, or 350°C to 450°C.

The amount of silica in the capsules in embodiments ranges from 1 to 60 weight percent, e.g., from 10 to 35 weight percent, based on the total weight of the capsules.

In some embodiments, the method to make a well cementing slurry comprises combining the silica-coated particles according to any embodiments herein with mix water and hydraulic cement to form a cement slurry for cementing a well. As used herein, "mix water" refers to the water that is added to the cement to make a cement slurry, and may contain various miscible or immiscible liquid and dispersed or dissolved solid additives such as fluid loss agents, antifoam agents, dispersants, antisettling agents, set retarders, or the like. In embodiments, the silica coated particles of the expanding agent may be combined with the hydraulic cement and/or mix water in any order to make the cement slurry. In embodiments, the coated expanding agent particles may be blended with the dry hydraulic cement, either offsite at a remote location or on-site as part of the cementing procedure, and then the blend combined with mix water to make the cement slurry. In embodiments, the method comprises dry blending the silica coated particles and the hydraulic cement, and mixing the dry blend with the mix water. The dry blend can be stored indefinitely under low-humidity conditions, and prepared off-site and transported to the job location.

In some embodiments, the method comprises mixing the silica coated particles and the mix water, and blending the mixture with the hydraulic cement. In some embodiments, depending on the impermeability of the silica coating thus the ability to prevent hydration of the coated expanding material, the particle-water mixture can be prepared in advance of the blending with the hydraulic cement, e.g., prepared off-site and transported to the job location, or prepared on-site and stored for an extended period, e.g., more than an hour or more than a day or more than a week before preparing the cement slurry. In embodiments, a method to produce a cement slurry comprises combining mix water and silica-coated particles of an expanding agent wherein the coating becomes water permeable at a pH greater than an activating pH to form a first mixture having a pH less than the activating pH, e.g., a pH about 5-10 or 6-9. The method may optionally include adding a (minor) amount of an acid or base (i.e., less than 10 wt%) to adjust the pH of the first mixture. This first mixture may be subsequently combined with the hydraulic cement to produce the cement slurry according to embodiments disclosed herein.

In embodiments, the viscosity of the cement slurry prior to the initial set time determined according to ASTM C191-04a, e.g., prior to placement in a well to be cemented, may be lower than 1000 cP at a shear rate of 100 s$^{-1}$. In embodiments, the cement comprises a hydraulic cement, such as, for example, Portland cement, calcium aluminate cement, fly ash, blast furnace slag, lime, silica, magnesium oxychloride, a geopolymer, zeolite, chemically bonded phosphate ceramic, diatomaceous earth, gilsonite, hematite, ilmenite, manganese tetraoxide, barite, glass or ceramic microspheres, or combinations thereof. In some embodiments the hydraulic cement consists essentially of Portland cement.

In another aspect, embodiments relate to methods for cementing a subterranean well having a borehole disposed through a formation, comprising the steps of: (i) preparing a cement slurry comprising water, hydraulic cement and particles of an expanding agent coated with silica; (ii) placing the slurry in an annular region of the well around a tubular body; (iii) hardening the slurry to form an at least partially set cement; and (iv) hydrating the expanding agent to form an expanded set cement within the annular region.

In some embodiments, the method further comprises forming bonds between the expanded set cement, the tubular body and a wall of the borehole.

In some embodiments, the method further comprises isolating a zone of the formation adjacent the expanded set cement.

In embodiments, infiltration of a portion of the water into one or more of the plurality of capsules comprises entry of the water through a discontinuity (e.g., an imperfection) in the silica shell. In embodiments, the infiltration of a portion of the water into one or more of the plurality of capsules comprises diffusion through at least a portion of the water permeable shell. In embodiments, the infiltrating of the portion of the water into one or more of the plurality of capsules hydrates the expanding agent thereby expanding the expanding agent in an amount sufficient to rupture the shell.

In embodiments, the cement slurry comprises an amount of expanding agent sufficient to form the expanded set cement transversely compressed between, and bonded to, the tubular body and the borehole wall, or between the tubular body and another tubular body. In embodiments, the bond between the tubular body and the expanded set cement and/or the bond between the borehole wall and the expanded set cement are each sufficient to isolate a zone of the formation adjacent the expanded set cement.

In embodiments, the bond between the tubular body and the expanded set cement is maintained after fluctuating the dimensions of the tubular body in response to a temperature change, a pressure change, a mechanical disturbance resulting from a well intervention, or a combination thereof. In embodiments, the bond between the borehole wall and the expanded set cement or the bond between the other tubular body and the expanded set cement is maintained after fluctuating the dimensions of the tubular body in response to the temperature change, the pressure change, the mechanical disturbance resulting from the well intervention, or combinations thereof.

In embodiments, the expanding agent is present in the cement slurry at a concentration greater than or equal to about 0.1 weight percent based on the total weight of hydraulic cement present, or greater than or equal to about 0.5 weight percent, or greater than or equal to about 1 weight percent, and less than or equal to about 25 weight percent, or less than or equal to about 20 weight percent, or less than or equal to about 15 weight percent, or less than or equal to about 10 weight percent, or less than or equal to about 5 weight percent, based on the total weight of hydraulic cement present. For example, the slurry may comprise from 0.1 to 20 weight percent of the coated particles, or from 0.5 to 10 weight percent of the coated particles, or from 1 to 5 weight percent of the coated particles, based on the total weight of the hydraulic cement and the coated particles.

In embodiments, the amount of expanding agent present in the slurry is suitable to produce from 0.1 percent to 5 percent total expansion of the cement slurry upon hardening into an expanded set cement as determined according to API 10B-5 or an equivalent thereof, e.g., from 0.2 to 3 percent total expansion, or from 0.5 to 2 percent total expansion.

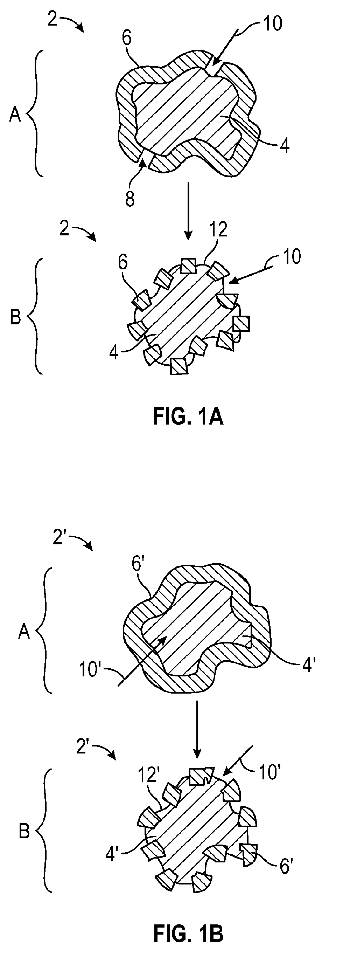

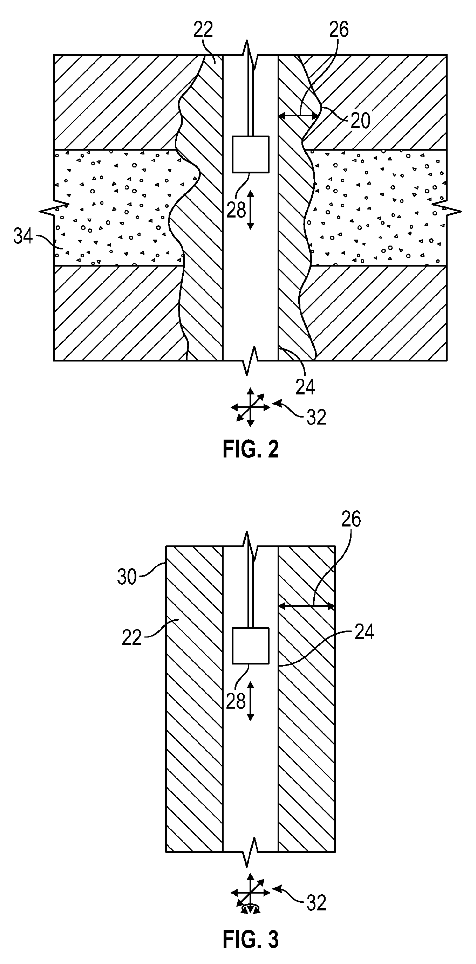

In embodiments, the cement slurry according to the instant disclosure is prepared which comprises water, hydraulic cement and capsules comprising a core of an expanding agent at least partially surrounded by (e.g., encapsulated within) a water-permeable shell (see FIG. 1), e.g., silica. The slurry is then placed in an annular region between a first tubular body (e.g., the well casing) and a borehole wall or a second tubular body (see FIGs. 2 and 3). The slurry is then allowed to at least partially set e.g., allowed to harden, to form a set cement, e.g., allowed to set for a time greater than or equal to the first or initial set time measured for the cement slurry when determined according to ASTM C191-04a, or an equivalent thereof. In addition, in some embodiments the method includes infiltrating a portion of the water present in the slurry into the capsules which, in embodiments, hydrates the expanding agent causing the expanding agent to expand. In embodiments, this expansion may cause the water permeable shell to rupture, thus releasing the expanding agent or reducing the inhibition of the water contacting the expanding agent. Expansion of the expanding agent forms an expanded set cement within the annular region. In embodiments, the expanded set cement is radially pre-stressed within the cement sheath, i.e., the expanded set cement is transversely compressed between the first tubular body and the borehole wall, or the first tubular body and the second tubular body.

In some embodiments, the expansion of the expanding agent ruptures the shell of the capsules and thereby releases the expanding agent and/or allows and/or accelerates further hydration of the expanding agent. In some embodiments, the amount of capsules, i.e., the amount of expanding agent present in the cement slurry is sufficient such that hydration of the expanding agent expands the set cement to a state of compression within the annular region and facilitates maintenance of a bond with the first tubular member and the borehole wall or second tubular member.

The method may further comprise fluctuating the dimensions of the first tubular body, e.g., allowing the dimensions of the tubular body to fluctuate in response to a temperature change, a pressure change, or a mechanical disturbance resulting from a well intervention or a combination thereof. The method may also further comprise transversely compressing the set cement between the first tubular body and the borehole wall or second tubular body to maintain bonding therewith, e.g., allowing the set cement to expand and/or to maintain the state of compression, during and/or after the dimensional fluctuation of the first tubular body.

In a further aspect, embodiments relate to methods for maintaining zonal isolation in a wellbore. A cement slurry is prepared that comprises water, hydraulic cement and capsules comprising a silica shell encapsulating an expanding agent core. The slurry is then placed in an annular region between a first tubular body and a borehole wall or a second tubular body. The slurry is hardened, e.g., allowed to harden, to form an at least partially set cement. In embodiments, the expanding agent is expanded, e.g., by hydration. For example, in some embodiments, water is infiltrated, e.g., allowed to infiltrate, into the capsules to hydrate the expanding agent in the core. The set cement is expanded to compress against and bond with the borehole wall to isolate a zone of the formation adjacent the expanded cement. The compression and bond are maintained adjacent the isolated zone after dimensions of the first tubular body are fluctuated, e.g., allowed to fluctuate in response to a temperature change, a pressure change, or a mechanical disturbance resulting from a well intervention or a combination thereof.

In yet a further aspect, embodiments relate to methods for determining the presence of cement behind a tubular body in a subterranean well. A cement slurry is prepared that comprises water, hydraulic cement and capsules of an expanding agent, e.g., comprising a silica shell at least partially surrounding a core compound, such as, for example, a core compound selected from the group consisting of calcium oxide, magnesium oxide, calcium sulfate hemihydrate, and combinations thereof. The slurry is then placed in an annular region between a first tubular body and a borehole wall or a second tubular body. The slurry is hardened, e.g., allowed to harden, to form a set cement, and the set cement is expanded. In some embodiments, water is infiltrated, e.g., allowed to infiltrate, into the capsules to hydrate the expanding agent (core compound) thereby causing the expanding agent to increase in size breaking the capsules and rupturing the shell. While maintaining the compression and bond, an acoustic logging tool is introduced into the tubular body. The tool measures acoustic impedance, amplitude, attenuation or a bond index or a combination thereof. In some embodiments, the measurements are taken azimuthally, longitudinally or both along the tubular body.

In some embodiments, water infiltration through the shell may occur by osmosis, increasing osmotic pressure within the encapsulating material, which may induce rupture of the shell to expose the remainder of the expanding agent to water present. The result may be an increase in the rate of hydration of the expanding agent. In some embodiments, the expanding agent is, or comprises an osmotic attractant which functions to draw water into the capsule, which in embodiments, bursts or otherwise ruptures the outer shell to expose the expanding agent to the water present. The rupture of the shell results in an increase in hydration and expansion of the expanding agent. In some embodiments, the water permeable shell may further comprise an osmotic attractant.

In embodiments, the silica shell may include a plurality of layers, which may be the same or different in composition, thickness, or a combination thereof, e.g., by employing silicate solutions with different silicates and/or concentrations thereof in successive applications, and/or by applying different amounts of the silicate solution in successive applications. In embodiments, the selection of the silica shell may include selecting the composition of the silica, increasing or decreasing the thickness of the encapsulating outer layer or layers of the silica shell (i.e., the number and composition of each shell layer, the thickness of each shell layer, or a combination thereof.

For example, a thicker shell layer may increase the strength or toughness of the core to resist rupture, as well as reduce hydraulic conductance, water infiltration, or the like. Likewise, the composition of the silica shell may be selected to have a lower water solubility to further delay water infiltration into the capsule. In other examples, a combination of shell layers having different properties may be selected to delay water infiltration into the capsule, thereby delaying hydration and subsequent expansion of the expanding agent until the cement slurry is properly placed within the annulus of the well bore and has begun to set i.e., allowed to set for a time greater than or equal to the first or initial set time measured for the cement slurry when determined according to ASTM C191-04a, or an equivalent thereof.

In the figures, like numerals are used to designate like parts. As shown in FIG. 1A, the capsule 2 comprises a core 4 comprising an expanding agent at least partially surrounded by a silica shell 6 comprising one or more discontinuities or imperfections 8. In the "A" stage, the water infiltrates (shown by arrow 10) through the imperfections 8 to contact the expanding material present in core 4, thereby hydrating and initiating expansion of the expanding agent. In the "B" stage, the core 4 is expanded and has ruptured the shell 6, thereby creating one or more enlarged openings 12 to activate the expanding agent to accelerate any further water infiltration 10, hydration and expansion of the core 4. The creation of the enlarged openings 12, whether by enlarging the imperfections 8 or rupturing the shell 6 or otherwise forming new openings, is referred to herein as "activating" the expanding agent.

As shown in FIG. 1B, the capsule 2' comprises a core 4' comprising an expanding agent at least partially surrounded by a silica shell 6' comprising a water permeable component or a component which has become water permeable, e.g., by dissolution or other means under downhole conditions. In the "A" stage, the water infiltrates (shown by arrow 10') through the permeable shell 6' to contact the expanding material present in core 4', thereby hydrating and initiating expansion of the expanding agent. In the "B" stage, the core 4' is expanded and has ruptured the shell 6, thereby creating one or more enlarged openings 12' to activate the expanding agent to accelerate any further water infiltration 10', hydration and expansion of the core 4'. The enlarged openings 12' can be created to activate the expanding agent by dissolution of portion(s) of the shell 6', rupturing the shell 6' or otherwise forming the openings.

With reference to some embodiments, borehole 20 and tubular member 30 are shown in FIGs. 2 and 3, respectively, wherein like numerals are used to designate like parts. The cement slurry comprising the capsules according to any embodiments disclosed herein is placed in the annulus 22 around the casing or other tubular member 24, set (initial and or final) in place, and with hydration of the expanding agent, expanded as indicated at 26 to induce a state of compression and facilitate bonding. The annulus 22 is shown between the tubular member 24 and the borehole wall 20 (FIG. 2) or the tubular member 30 (FIG. 3). The logging tool 28 is then introduced to take measurements as described in some embodiments herein, for example, to map impedance and determine the presence of cement in the annulus 22 behind the tubular member 24, or the absence thereof suggesting formation of a microannulus (not shown) between the tubular member 24 and the set cement in the annulus 22.

The tubular member 24 in FIGs. 2 and 3 (and/or tubular member 30 in FIG. 3) may be dimensionally changed in length, diameter, rotational alignment, etc., e.g., with respect to the wellbore 20 (FIG. 2) or the tubular member 30 (FIG. 3), some examples of which are indicated at 32. Expansion 26 of the cement set in the annulus 22 can occur before the dimensional change 32, and according to some embodiments of the disclosure, the state of compression of the cement is maintained in the annulus 22 during and/or after the dimensional change 32, e.g., by further expansion or increased compression to accommodate the changing dimension(s). Expansion 26 of the cement set in the annulus 22 can instead and/or also occur during and/or after the dimensional change 32, and according to some embodiments of the disclosure, the state of compression of the cement can be induced in the annulus 22 during and/or after the dimensional change 32.

With reference to FIG. 2, in some embodiments a zone 34 is isolated by placement, setting (initial and or final), and expansion 26 of the cement in the annulus 22. The compression and bonding can be maintained during dimensional change 32, e.g., so that the zone 34 remains in isolation and does not fluidly communicate via the annulus 22 with other zones in the formation.

As shown in FIGS. 2 and 3, in embodiments the cement slurry comprises an amount of expanding agent sufficient to form the expanded set cement transversely compressed between (due to expansion 26) and bonded to, the first tubular member (tubular body) 24 and the borehole wall, or the first tubular member (tubular body) 24 and the second tubular member (tubular body) 30.

As shown in FIG. 2, in embodiments, the bonds between the first tubular body 24 and the expanded set cement, and between the borehole wall and the expanded set cement are each sufficient to be acoustically coupled and/or to isolate a zone 34 of the formation adjacent the expanded set cement, e.g., from another zone. In some embodiments, the compression 26 and bonding can be maintained during dimensional change 32, e.g., so that the zone 34 remains in isolation and does not fluidly communicate via the annulus 22 with other zones.

For all aspects, the encapsulated expanding agent may be encapsulated by a silica material which isolates the agent at (the Earth's) surface conditions, but releases the expanding agent within the borehole, e.g., by permeation of water through the shell and/or rupture or degradation or dissolution of the shell. In some embodiments, as shown in FIG. 4, the capsules comprise or consist essentially of capsules 100 having a single-core shell configuration, in which the expanding agent is arranged as a single core 102 at least partially surrounded by the silica shell 104. In some embodiments, as shown in FIG. 5, the capsules 106 comprise or consist essentially of capsules having a "matrix-island" configuration in which portions of the expanding agent 108 (only a representative amount are numbered for clarity) are dispersed as a discontinuous phase within the continuous shell 110. In some embodiments, the capsules may comprise a "matrix-island" configuration disposed around a single-core shell such that the capsules comprise both a single-core and a matrix-island configuration.

In some embodiments, core-shell type particles can release or expose the encapsulated expanding agent, e.g., all at once, if the shell is ruptured, which can occur mechanically and/or by chemical degradation. As used herein, "rupture" refers to any loss of integrity of the shell whether by tearing, bursting, and so forth. Matrix-island type cores can release the islands of expanding agent upon chemical degradation and/or dissolution of the matrix.

A number of materials may be used as encapsulating materials to form the shell. Examples include inorganic compounds which form a water permeable shell under conditions present within the formation.

Activation of an encapsulated expanding agent over time may be brought about by means of a silica coating material which dissolves slowly or undergoes chemical degradation under conditions encountered in the borehole, thereby making the coating permeable to allow the infiltration of water and or leading to rupture of the shell of core-shell type particles. For example, both fumed silica and precipitated silica become water soluble under the high pH (i.e., pH>10) present within the hydraulic cement as it sets.

In some embodiments, the water infiltration may form the expanded set cement without rupture of the shell. In some embodiments, the water infiltration may dissolve or otherwise degrade essentially all of the shell.

In some embodiments, the water permeability of the shell depends solely on deformations or discontinues within the shell so that the shell impedes infiltration, but does not entirely eliminate infiltration of water into the core for a period of time; after which the expanding agent expands in an amount sufficient to increase and thus accelerate the hydration of the expanding agent to form the expanded set cement.

In some embodiments, although the rates of water infiltration, release of encapsulated expanding agent, and expansion of the cement may be predicted, the infiltration, release, and expansion profiles can also be observed in laboratory experiments before the particles are used. Such experiments involve exposing a sample quantity of the particles to conditions of pH and temperature which match those found in the borehole location and monitoring water infiltration and/or release of expanding agent over time, and/or formulating the cement slurry with the encapsulated particles and monitoring the expansion of the set cement upon exposure to the matching borehole conditions.

## EMBODIMENTS LISTING

Accordingly, the present disclosure provides the following embodiments, among others:

C1. Encapsulated expanding agent useful in a well cementing slurry, comprising one or more particles of an expanding agent coated with silica.

C2. The encapsulated expanding agent of Embodiment C1 wherein the expanding agent particles have an average particle size between 0.1 $\mu$m and 500 $\mu$m.

C3. The encapsulated expanding agent of Embodiment C1 or Embodiment C2 the coated particles have an average particle size between 1 $\mu$m and 1500 $\mu$m.

**C4.** The encapsulated expanding agent of Embodiment C1 or Embodiment C3 wherein the expanding agent particles have an average particle size between 1 $\mu$m and 100 $\mu$m

**C5.** The encapsulated expanding agent of Embodiment C2 or Embodiment C4 wherein the coated particles have an average particle size between 10 $\mu$m and 500 $\mu$m.

**C6.** The encapsulated expanding agent according to any one of Embodiments C1 to C5 wherein the silica comprises a condensation product of a silicate.

**C7.** The encapsulated expanding agent according to Embodiment C6 wherein the silicate comprises sodium silicate.

**C8.** The encapsulated expanding agent according to Embodiment C6 or Embodiment C7 wherein the silicate comprises a potassium silicate.

**C9.** The encapsulated expanding agent according to any one of Embodiments C1 to C8 wherein the silica-coated particles comprise from 1 to 60 weight percent of the silica, based on the total weight of the particles and the coating.

**C10.** The encapsulated expanding agent according to any one of Embodiments C1 to C8 wherein the silica-coated particles comprise from 10 to 35 weight percent of the silica, based on the total weight of the particles and the coating.

**C11.** The encapsulated expanding agent according to any one of Embodiments C1 to C10 wherein the expanding agent is partially hydrated at an outer surface of the respective particles adjacent the coating.

**C12.** The encapsulated expanding agent according to any one of Embodiments C1 to C11 wherein ones of the expanding agent particles comprise respective cores in the coated particles and the silica coating comprises a shell.

**C13.** The encapsulated expanding agent according to any one of Embodiments C1 to C11 wherein a plurality of the expanding agent particles are dispersed in a matrix of the silica coating.

**C14.** The encapsulated expanding agent according to any one of Embodiments C1 to C13 wherein the expanding agent comprises calcium oxide, magnesium oxide, calcium sulfate hemihydrate, or a combination thereof.

**C15.** The encapsulated expanding agent according to any one of Embodiments C1 to C13 wherein the expanding agent comprises calcium oxide.

**C16.** The encapsulated expanding agent according to any one of Embodiments C1 to C13 wherein the expanding agent comprises, magnesium oxide.

**C17.** The encapsulated expanding agent according to any one of Embodiments C1 to C13 wherein the expanding agent comprises a combination of calcium oxide and magnesium oxide.

**C18.** A dry blend of the encapsulated expanding agent according to any one of Embodiments C1 to C17 with hydraulic cement for preparing a well cementing slurry.

**C19.** A slurry of the encapsulated expanding agent according to any one of Embodiments C1 to C17 with mix water for preparing a well cementing slurry.

**C20.** A well cementing slurry comprising the encapsulated expanding agent according to anyone of Embodiments C1 to C17, cement and water.

**C21.** The slurry according to Embodiment C20 wherein the cement comprises hydraulic cement.

**C22.** The dry blend or slurry according to any one of Embodiments C18 to C21 wherein the dry blend or slurry comprises from 0.1 to 20 weight percent of the silica-coated particles, based on the total weight of the cement and the silica-coated particles.

**C23.** The dry blend or slurry according to any one of Embodiments C18 to C21 wherein the dry blend or slurry comprises from 0.5 to 10 weight percent of the silica-coated particles, based on the total weight of the cement and the silica-coated particles.

**C24.** The dry blend or slurry according to any one of Embodiments C18 to C21 wherein the dry blend or slurry comprises from 1 to 5 weight percent of the silica-coated particles, based on the total weight of the cement and the silica-coated particles.

**C25.** The well cementing slurry according to any one of Embodiments C20 to C24, wherein the slurry exhibits less than 50% relative expansion, based on a total percent expansion of the expanded set cement determined according to API-10B-5 at 45°C and 1 atm, prior to an initial set time for the cement slurry, determined according to ASTM C191-04aC at 45°C and 1 atm, and greater than 50% relative expansion after the initial set time for the cement slurry.

**S1.** A system for cementing a subterranean well in an annulus between a casing disposed within a borehole and a formation comprising the encapsulated expanding agent according to any one of embodiments C1- C17 in a cement slurry, or according to the cement slurry of any one of Embodiments C20 to C25; and a pumping system to place the cement slurry in the annulus.

**M1.** A method to prepare a well cementing slurry, comprising combining the encapsulated expanding agent according to any one of Embodiments C1 to C17 with mix water and cement to form a cement slurry for cementing a well.

**M2.** A method to prepare a well cementing slurry, comprising coating particles of an expanding agent with silica, and combining the coated particles with mix water and cement to form a cement slurry for cementing a well.

**M3.** The method according to Embodiment M2, wherein the coating of the particles with the silica comprises: contacting the particles with a solution of a silicate; and condensing the silicate to form a layer of the silica coating.

**M4.** The method according to Embodiment M3, wherein the silicate solution comprises a solvent and the silicate is selected from sodium silicate, potassium silicate, and the combination thereof.

**M5.** The method according to Embodiment M4, wherein the silicate comprises sodium silicate.

**M6.** The method according to Embodiment M4, wherein the silicate comprises potassium silicate.

**M7.** The method according to Embodiment M4, wherein the silicate comprises a combination of sodium silicate and potassium silicate.

**M8.** The method according to any one of Embodiments M3 to M7, wherein a molar ratio of the aldehyde to the phenolic monomer is less than 1.

**M9.** The method according to any one of Embodiments M4 to M8, wherein the solvent is aqueous.

**M10.** The method according to Embodiment M9, wherein contacting the expanding agent particles with the aqueous solvent partially hydrates an outer surface of the respective particles adjacent the coating.

**M11.** The method according to any one of Embodiments M4 to M8, wherein the solvent is non-aqueous.

**M12.** The method according to Embodiment M11, wherein contacting the expanding agent particles with the non-aqueous solvent avoids hydration an outer surface of the respective particles adjacent the coating, wherein the outer surface is anhydrous.

**M13.** The method according to any one of Embodiments M3 to M12, comprising spraying the silicate solution on the particles.

**M14.** The method according to any one of Embodiments M3 to M12, further comprising treating the capsules with an organic and/or inorganic acid to neutralize any residual silicate.

**M15.** The method according to Embodiment M14, wherein the acid is selected from hydrochloric acid, sulfuric acid, nitric acid, phosphoric acid, acetic acid, methane sulfonic acid, and combinations thereof.

**M16.** The method according to any one of Embodiments M3 to M15, further comprising heat treating the coated particles at a temperature from 200°C to 1000°C.

**M17.** The method according to any one of Embodiments M3 to M15, further comprising heat treating the coated particles at a temperature from 250°C to 650°C.

**M18.** The method according to any one of Embodiments M3 to M15, further comprising heat treating the coated particles at a temperature from 350°C to 450°C.

**M19.** The method according to any one of Embodiments M3 to M18, further comprising repeating the contacting and condensing one or a plurality of times to form a plurality of the layers.

**M20.** The method according to Embodiments M1 to M19 wherein the cement comprises hydraulic cement.

**M21.** The method according to any one of Embodiments M1 to M20, further comprising dry blending the encapsulated expanding agent with hydraulic cement, and mixing the dry blend with the mix water.

**M22.** The method according to any one of Embodiments M1 to M20, further comprising slurrying the encapsulated expanding agent in the mix water, and mixing the slurry with hydraulic cement.

**M23.** The method according to any one of Embodiments M1 to M22 wherein the dry blend or slurry comprises from 0.1 to 20 weight percent of the silica-coated particles, based on the total weight of the cement and the silica-coated particles.

**M24.** The method according to any one of Embodiments M1 to M22 wherein the dry blend or slurry comprises from 0.5 to 10 weight percent of the silica-coated particles, based on the total weight of the cement and the silica-coated particles.

**M25.** The method according to any one of Embodiments M1 to M22 wherein the dry blend or slurry comprises from 1 to 5 weight percent of the silica-coated particles, based on the total weight of the cement and the silica-coated particles.

**M26.** The encapsulated expanding agent according to any one of Embodiments M1 to M25 wherein the expanding agent comprises calcium oxide, magnesium oxide, calcium sulfate hemihydrate, or a combination thereof

**M27.** The method according to any one of Embodiments M1 to M25 wherein the expanding agent comprises calcium oxide.

**M28.** The method according to any one of Embodiments M1 to M25 wherein the expanding agent comprises, magnesium oxide.

**M29.** The method according to any one of Embodiments M1 to M25 wherein the expanding agent comprises a combination of calcium oxide and magnesium oxide.

**E1**. A method to cement a subterranean well having a borehole disposed through a formation, comprising:

i) preparing a cement slurry comprising mix water, cement, and the encapsulated expanding agent according to any one of embodiments C1 - C17;
(ii) placing the slurry in an annular region of the well between a first tubular body and a borehole wall, or between the first tubular body and a second tubular body;
(iii) hardening the slurry to form an at least partially set cement; and
(iv) hydrating the expanding agent to form an expanded set cement within the annular region.

**E2.** A method to cement a subterranean well having a borehole disposed through a formation, comprising:

i) preparing the cement slurry comprising water, cement, and the encapsulated expanding agent according to any one of Embodiments C20 to C25, or according to the method of any one of Embodiments M1 to M29;
(ii) placing the slurry in an annular region of the well between a first tubular body and a borehole wall, or between the first tubular body and a second tubular body;

(iii) hardening the slurry to form an at least partially set cement; and

(iv) hydrating the expanding agent to form an expanded set cement within the annular region.

**E3.** The method according to Embodiment E 1 or Embodiment E2, further comprising forming a bond between the expanded set cement and the tubular member, and or between the expanded set cement and a wall of the borehole or a tubular body.

**E4.** The method according to any one of Embodiments E1 to E3, further comprising isolating a zone of the formation adjacent the expanded set cement.

**E5.** The method according to any one of Embodiments E1 to E4, further comprising:

a. preparing a proposed cement slurry formulation comprising the water, cement, and encapsulated expanding agent;

b. determining that the proposed cement slurry formulation exhibits expansion characteristics of less than 50% relative expansion, based on a total percent expansion of the expanded set cement determined according to API-10B-5, prior to an initial set time for the proposed slurry formulation, determined according to ASTM C191-04aC, and greater than 50% relative expansion after the initial set time for the proposed slurry formulation, wherein the initial set time, final set time, and relative expansion are determined at a maximum downhole pressure and temperature in the annular region up to 100°C, or at 100°C if the maximum temperature of the annular region is greater than 100°C, during the placing (ii), hardening (iii), and hydrating (iv); and

c. preparing the cement slurry in (i) for the placing (ii), hardening (iii), and hydrating (iv), in accordance with the proposed cement slurry formulation having the characteristics as determined in (b).

## EXAMPLE

The following examples are provided to more fully illustrate the disclosure. These examples are not intended to limit the scope of the disclosure in any way.

A mixture of CaO/MgO was coated with 35 wt% silica, then post-treated with 0.5 M HCl and heated at 350°C.

The hydration heat of the material corresponds to the heat released by the following reactions:

$$CaO + H_2O \rightarrow Ca(OH)_2, \ 1150 \ J/g$$

$$MgO + H_2O \rightarrow Mg(OH)_2, \ 930 \ J/g$$

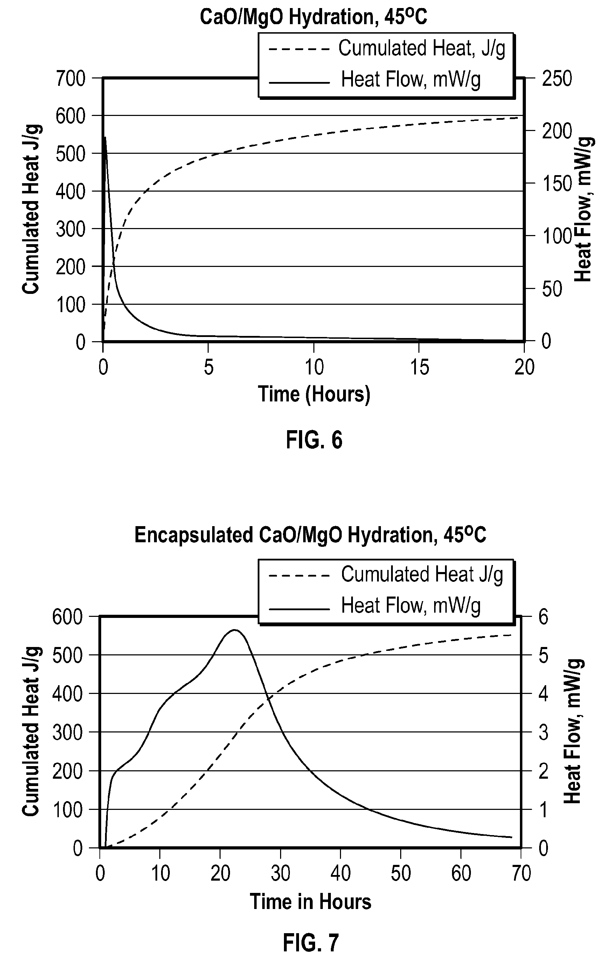

At low temperature (below 60°C), the heat was mainly provided by the first reaction during the first hours. With untreated material, a plateau is reached within 10 hours as illustrated in FIG. 6. When it was protected by the silica coating, the hydration was much slower, and a plateau was reached after 70 hours, as shown in FIG. 7.

Hydraulic cement slurries were formulated, one with untreated CaO/MgO, and one with the silica-encapsulated CaO/MgO, as shown in the Table.

**TABLE**

| Component | Formulation with untreated CaO/MgO | Formulation with encapsulated CaO/MgO |
|---|---|---|
| Cement, class G | 759 g | 760 g |
| CaO/MgO (untreated or treated) | 38 g | 38 g |
| Fluid loss agent | 0 g | 0.8 g |
| Antifoam agent | 3.0g | 3.0 g |
| Dispersant | 6.6 g | 6.6 g |
| Anti-settling agent | 2.3 g | 2.3 g |
| Water | 339 g | 339 g |

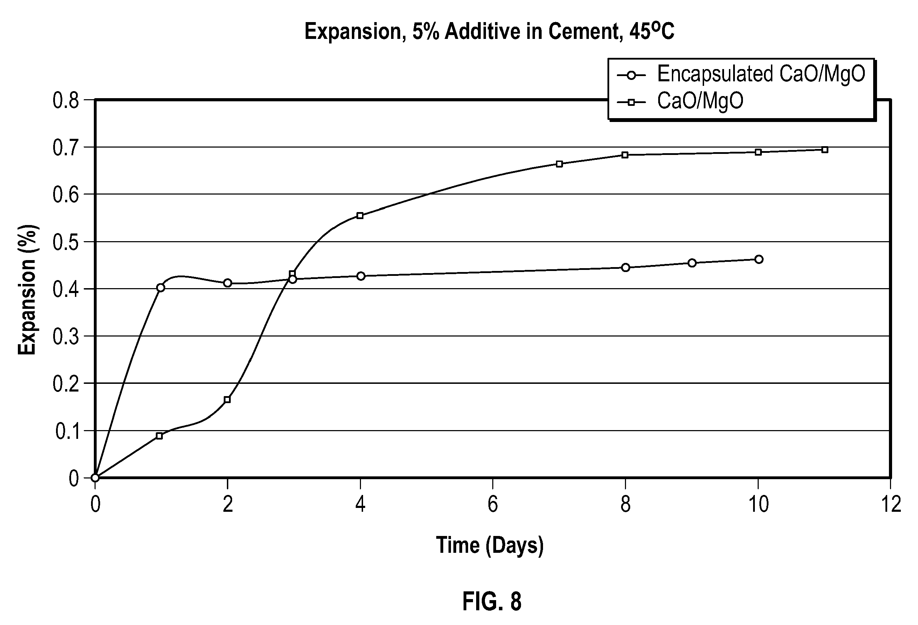

The expansion of the cement was then measured at 45°F using an API linear expansion cell (API 10B-5, or ISO 10426-5). As shown in FIG. 8, with untreated CaO/MgO, the expansion reached a plateau after 1 day. However, with the encapsulated CaO/MgO, very little expansion was observed during the first 2 days, and then expansion was observed over 2-3 days.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112 (f) for any limitations of any of the claims herein, except for those in which the claim expressly uses the words 'means for' together with an associated function.

## Claims

1. A method to prepare a well cementing slurry, comprising:

   coating particles of an expanding agent with silica; and
   combining the coated particles with mix water and cement to form a cement slurry for cementing a well.

2. The method according to claim 1, wherein the expanding agent particles have an average particle size between 0.1 $\mu$m and 500 $\mu$m (or between 1 $\mu$m and 100 $\mu$m), and the coated particles have an average particle size between 1 $\mu$m and 1500 $\mu$m (or between 10 $\mu$m and 500 $\mu$m).

3. The method according to claim 1 or claim 2, wherein the coating of the particles with the silica comprises:

   contacting the particles with a solution of a silicate; and
   condensing the silicate in the coating.

4. The method according to claim 3, wherein the silicate solution comprises a solvent and the silicate is selected from sodium silicate, potassium silicate, and the combination thereof.

5. The method according to claim 3 or claim 4, comprising spraying the silicate solution on the particles.

6. The method according to any one of claims 3 to 5, wherein the silicate solution is aqueous.

7. The method according to any one of claims 3 to 6, wherein the silicate solution is non-aqueous.

8. The method according to any one of claims 3 to 7, further comprising treating the capsules with an organic and/or inorganic acid to neutralize any residual silicate.

9. The method according to claim 8, wherein the acid is selected from hydrochloric acid, sulfuric acid, nitric acid, phosphoric acid, acetic acid, methane sulfonic acid, and combinations thereof.

10. The method according to any one of claims 1 to 9, further comprising heat treating the coated particles at a temperature from 200°C to 1000°C.

11. The method according to any one of claims 1 to 10, further comprising dry blending the coated particles and the cement, and mixing the blend with the mix water.

12. The method according to any one of claims 1 to 10, further comprising mixing the coated particles and the mix water, and blending the mixture with the hydraulic cement.

13. A well cementing slurry, comprising hydraulic cement, water, and particles of an expanding agent coated with silica.

**14.** A well cementing slurry, comprising hydraulic cement, water, and particles of an expanding agent coated with silica, wherein the slurry is made according to the method of any one of claims 1 to 12.

**15.** The well cementing slurry according to claim 13 or claim 14, wherein the coated particles comprise from 1 to 60 weight percent of the silica, based on the total weight of the expanding agent and silica.

**16.** The well cementing slurry according to any one of claims 13 to 15, wherein the slurry comprises from 0.1 to 20 weight percent of the coated particles, based on the total weight of the hydraulic cement and the coated particles.

**17.** A method to cement a subterranean well having a borehole disposed through a formation, comprising:

(i) preparing the well cementing slurry according to any one of claims 13 to 16, or according to the method of any one of claims 1 to 12;
(ii) placing the slurry in an annular region of the well around a tubular body;
(iii) hardening the slurry to form an at least partially set cement; and
(iv) hydrating the expanding agent to form an expanded set cement within the annular region.

**18.** The method according to claim 17, further comprising:

a. preparing a proposed cement slurry formulation comprising the water, cement, and encapsulated expanding agent;
b. determining that the proposed cement slurry formulation exhibits expansion characteristics of less than 50% relative expansion, based on a total percent expansion of the expanded set cement determined according to API-10B-5, prior to an initial set time for the proposed slurry formulation, determined according to ASTM C191-04aC, and greater than 50% relative expansion after the initial set time for the proposed slurry formulation, wherein the initial set time, final set time, and relative expansion are determined at a maximum downhole pressure and temperature in the annular region up to 100°C, or at 100°C if the maximum temperature of the annular region is greater than 100°C; and
c. preparing the cement slurry in (i) for the placing (ii), hardening (iii), and hydrating (iv), in accordance with the proposed cement slurry formulation exhibiting the characteristics determined in (b).

**FIG. 1A**

**FIG. 1B**

FIG. 2

FIG. 3

100 —

102
104

**FIG. 4**

106 —

110

108

**FIG. 5**

## CaO/MgO Hydration, 45°C

FIG. 6

## Encapsulated CaO/MgO Hydration, 45°C

FIG. 7

**Expansion, 5% Additive in Cement, 45°C**

FIG. 8

Europäisches
Patentamt

European
Patent Office

Office européen
des brevets

# EUROPEAN SEARCH REPORT

Application Number

EP 16 30 5449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/023949 A2 (EVONIK DEGUSSA GMBH [DE]; KATUSIC STIPAN [DE]; KRESS PETER [DE]; FISCH) 21 February 2013 (2013-02-21) * page 13 - page 15; claims 1i, 6c, 7, 10-11 * | 1-3,5, 7-16 | INV. C09K8/467 C04B20/10 C04B28/02 |
| X | US 5 118 527 A (WILSON ALFONZO L [US]) 2 June 1992 (1992-06-02) * column 5 - columns 7-8; claims 2,4,9 * | 1-4,6,8, 9,11-16 | |
| A | WO 2015/195596 A1 (SCHLUMBERGER SERVICES PETROL [FR]; SCHLUMBERGER CA LTD [CA]; SCHLUMBER) 23 December 2015 (2015-12-23) * page 14; claim 1(i) (ii) (iii) (iv) * | 1-18 | |
| A | WO 2004/087606 A1 (CONSTR RES & TECH GMBH [DE]; HOLLAND UWE [DE]; DEGENKOLB MATTHIAS [DE]) 14 October 2004 (2004-10-14) * claims 1,5, 6,13 * | 1-16 | |
| A | US 2005/167107 A1 (RODDY CRAIG W [US] ET AL) 4 August 2005 (2005-08-04) * claims * | 1-18 | TECHNICAL FIELDS SEARCHED (IPC) C09K C04B |
| A | WO 03/048526 A2 (WYO BEN INC [US]) 12 June 2003 (2003-06-12) * claims * | 1-18 | |

The present search report has been drawn up for all claims

| Place of search | Date of completion of the search | Examiner |
|---|---|---|
| Munich | 31 October 2016 | Philippart, Anahí |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## EP 3 235 890 A1

**ANNEX TO THE EUROPEAN SEARCH REPORT
ON EUROPEAN PATENT APPLICATION NO.**

EP 16 30 5449

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2016

| Patent document cited in search report | | Publication date | Patent family member(s) | | Publication date |
|---|---|---|---|---|---|
| WO 2013023949 | A2 | 21-02-2013 | DE 102012204148 A1<br>WO 2013023949 A2 | | 21-02-2013<br>21-02-2013 |
| US 5118527 | A | 02-06-1992 | NONE | | |
| WO 2015195596 | A1 | 23-12-2015 | NONE | | |
| WO 2004087606 | A1 | 14-10-2004 | DE 10315270 A1<br>EP 1608604 A1<br>ES 2496942 T3<br>JP 5209873 B2<br>JP 2006521992 A<br>US 2006269752 A1<br>US 2011139037 A1<br>WO 2004087606 A1 | | 14-10-2004<br>28-12-2005<br>22-09-2014<br>12-06-2013<br>28-09-2006<br>30-11-2006<br>16-06-2011<br>14-10-2004 |
| US 2005167107 | A1 | 04-08-2005 | AR 049616 A1<br>CA 2553897 A1<br>EP 1706582 A1<br>US 2005167107 A1<br>WO 2005073504 A1 | | 23-08-2006<br>11-08-2005<br>04-10-2006<br>04-08-2005<br>11-08-2005 |
| WO 03048526 | A2 | 12-06-2003 | AU 2002353010 A1<br>CA 2469719 A1<br>US 2003104949 A1<br>WO 03048526 A2 | | 17-06-2003<br>12-06-2003<br>05-06-2003<br>12-06-2003 |

EPO FORM P0459

For more details about this annex : see Official Journal of the European Patent Office, No. 12/82

22

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4332619 A
- US 4328038 A
- US 7494544 B
- US 7156174 B
- US 7988782 B
- US 20150107493 A
- US 4419136 A
- US 2465278 A

- US 3884710 A
- US 4002483 A
- US 4797159 A
- US 5942031 A
- US 6966376 B
- US 14307430 B
- US 5741357 A
- EP 2169027 A1